# EUROPÄISCHE PATENTSCHRIFT

(11) **EP 3 969 975 B1**
(45) Veröffentlichungstag und Bekanntmachung des Hinweises auf die Patenterteilung: **16.11.2022**
(21) Anmeldenummer: 20760456.2
(22) Anmeldetag: 20.08.2020
(51) Int. Cl.: G05D 7/01, E03C 1/00, B29C 45/00

(54) **DURCHFLUSSMENGENREGLER UND VERFAHREN ZUR HERSTELLUNG**
FLOW RATE CONTROLLER AND METHOD FOR PRODUCTION
RÉGULATEUR DE DÉBIT ET SON PROCÉDÉ DE PRODUCTION

(30) Priorität: 06.09.2019 DE 202019104935 U
(43) Veröffentlichungstag der Anmeldung: 23.03.2022
(73) Patentinhaber: Neoperl GmbH, 79379 Müllheim (DE)
(72) Erfinder: KIM, Seoung-Eun, 79189 Bad Krozingen (DE)
(74) Vertreter: Mertzlufft-Paufler, Cornelius
(86) Internationale Anmeldenummer: PCT/EP2020/073433
(87) Internationale Veröffentlichungsnummer: WO 2021/043594

(56) Entgegenhaltungen:
- EP-A2- 1 135 241
- EP-B1- 1 135 241
- WO-A1-2016/055481
- DE-A1- 2 403 084
- DE-C2- 2 403 084
- DE-U1- 29 520 069
- US-A- 5 899 224

## Beschreibung

Die Erfindung betrifft einen Durchflussmengenregler mit einem Regelkörper, durch den ein lichtes Öffnungsmaß einer Regelöffnung in Abhängigkeit eines den Regelkörper beaufschlagenden Drucks veränderbar ist, wobei der Durchflussmengenregler einen Umgehungskanal (Bypass) zu der Regelöffnung aufweist.

Zudem betrifft die Erfindung ein Verfahren zur Herstellung eines Durchflussmengenreglers.

Derartige Durchflussmengenregler sind bereits bekannt. Der Umgehungskanal zu der Regelöffnung hat dabei die Aufgabe, insbesondere bei einem geringen Druck einen gewissen Durchfluss durch den Durchflussmengenregler zu gewährleisten. Vorzugsweise kann es dabei vorgesehen sein, dass innerhalb eines Arbeitsbereichs des Durchflussmengenreglers ein konstanter oder nahezu konstanter Volumenstrom, welcher bevorzugt druckunabhängig ist, einstellbar ist.

Die DE 295 20 069 U1 beschreibt einen gattungsgemäßen hydraulischen Durchflussmengenregler nach dem Oberbegriff des Anspruch 1, der am Eingang eines Magnetventils für den Wasserzulauf bei elektrischen Haushaltsgeräten verwendbar ist.

Die DE 24 03 084 A1 beschreibt einen Flüssigkeitsmengenregler mit Geräuschdämpfungsglied.

Die WO 2016/055481 A1 beschreibt ein Füllventil zum Befüllen eines Spülkastens, bei dem zur Reduktion von störenden Geräuschen der Durchflussregler als Volumenstromregelung zum Erhalt einer Volumenstromkonstanz der Flüssigkeit in Abhängigkeit von dem Fließdruck am Zulauf ausgebildet ist.

Die US 5 899 224 A beschreibt einen Strahlregler zum Einsetzen in eine Flüssigkeitsleitung oder eine Bohrung einer Sanitärarmatur.

Bei Durchflussmengenreglern vorbekannter Art hat sich jedoch herausgestellt, dass es bei fluidischen Drücken innerhalb eines üblichen Arbeitsbereichs von Durchflussmengenreglern zu einer unerwünschten Geräuschentwicklung kommen kann. Dies kann als besonders störend durch einen Benutzer empfunden werden.

Es besteht somit die Aufgabe, einen Durchflussmengenregler eingangs genannter Art zu schaffen, bei welchem die genannten Nachteile ausgeräumt sind.

Eine Lösung dieser Aufgabe wird erfindungsgemäß durch einen Durchflussmengenregler mit den Merkmalen nach Anspruch 1 bereitgestellt.

Insbesondere wird erfindungsgemäß zur Lösung der Aufgabe ein Durchflussmengenregler eingangs genannter Art vorgeschlagen, wobei sich der Querschnitt des Umgehungskanals entlang des Verlaufs des Umgehungskanals verändert. Es hat sich gezeigt, dass die Geräuschentwicklung damit zusammenhängt, dass beim Übergang in den Umgehungskanal eine Abrisskante gebildet ist, an welcher das Fluid bestrebt ist, sich von der Innenwandung des Umgehungskanals zu lösen. Dadurch entsteht ein Unterdruckgebiet nahe der Innenwandung, in der zum Beispiel ein Phasenübergang von flüssigem Wasser in die gasförmige Phase stattfinden kann. Dadurch bilden sich Kavitationsblasen, die in Tests als Hauptgrund für die störende Geräuschentwicklung identifiziert wurden. Überraschenderweise konnte durch die oben genannte erfindungsgemäße Ausgestaltung des Umgehungskanals eine signifikante Reduzierung störender Geräusche während des Gebrauchs des Durchflussmengenreglers erreicht werden. Durch den ungleichen Querschnitt des Umgehungskanals entlang seines Verlaufs kann die Bildung von Kavitationsblasen nachweislich besser vermieden werden.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Gemäß einer vorteilhaften Ausgestaltung kann der Querschnitt des Umgehungskanals entlang seines Verlaufs im Durchmesser variieren. Alternativ oder ergänzend dazu kann sich eine Querschnittsform des Umgehungskanals entlang seines Verlaufs verändern. Vorzugsweise kann dabei ein lichtes Öffnungsmaß des Umgehungskanals an einer Zuströmseite des Umgehungskanals größer als an einer Abströmseite des Umgehungskanals sein. Weiter bevorzugt kann sich der Umgehungskanal entlang einer Strömungsrichtung verjüngen, insbesondere kontinuierlich verjüngen. Es hat sich gezeigt, dass durch einen variierenden Querschnittsdurchmesser im Vergleich zu einem über den Verlauf des Umgehungskanals gleichbleibenden Querschnittsdurchmesser die Geräuschentwicklung weiter verringert werden kann. Insbesondere gilt dies auch in Situationen, in denen höhere Drücke herrschen, wie zum Beispiel beim Anliegen einer Druckdifferenz von ca. 3 bar zwischen der Zuströmseite und der Abströmseite des Umgehungskanals.

Bei einer vorteilhaften Ausgestaltung kann vorgesehen sein, dass der Umgehungskanal eine Umfangswandung hat, die mit einer Stirnwandung, die den Umgehungskanal auf einer Zuströmseite längs einer Strömungsrichtung begrenzt, einen Winkel von mehr als 90° einschließt. Somit ist ein ungünstiger Einfluss von scharfen Kanten oder Stufen am Eingang des Umgehungskanals auf Blasen- und/oder Geräuschentwicklung durch Kavitation reduzierbar oder sogar eliminierbar.

Beispielsweise hat sich eine besonders gute Reduktion der Geräuschentwicklung ergeben, wenn der Winkel mehr als 93° beträgt. Hierbei kann es ausreichend sein, wenn der Winkel weniger als 100° beträgt. Somit kann eine lichte Weite des Umgehungskanals ausreichend groß für eine zufriedenstellende Durchströmung gewählt sein.

Erfindungsgemäß ist nun vorgesehen, dass der Umgehungskanal hinterschnittfrei ausgebildet ist und, dass der Umgehungskanal einen monoton in Strömungsrichtung abnehmenden lichten Öffnungsquerschnitt hat. Somit sind Verwirbelungen an Kanalaufweitungen vermeidbar. Außerdem ist der Umgehungskanal einfach beim Spritzgießen entformbar.

Gemäß einer besonders vorteilhaften Ausgestaltung zur Vermeidung einer störenden Geräuschentwicklung kann der Umgehungskanal wenigstens abschnittsweise, insbesondere durchgehend, eine konische Form aufweisen. Alternativ oder ergänzend kann der Umgehungskanal wenigstens abschnittsweise, insbesondere durchgehend, eine geschwungene Form aufweisen. Es hat sich dabei gezeigt, dass der Neigungswinkel des Umgehungskanals und der zwischen der Zuströmseite und der Abströmseite herrschende Druckunterschied Einfluss auf die Geräuschentwicklung haben. Je höher der Druckunterschied desto größer ist der Neigungswinkel bezogen auf eine Längsrichtung des Umgehungskanals zu wählen, um eine Geräuschentwicklung möglichst wirksam zu vermeiden.

Gemäß einer bevorzugten Ausgestaltung des Durchflussmengenreglers kann eine den Umgehungskanal begrenzende Wandung einen Neigungswinkel von mindestens 3 Grad aufweisen. Insbesondere kann eine den Umgehungskanal begrenzende Wandung einen Neigungswinkel von mindestens 4 Grad, insbesondere von mindestens 5 Grad, insbesondere von mindestens 6 Grad, insbesondere von mindestens 7,5 Grad, insbesondere von mindestens 10 Grad, insbesondere von mindestens 12,5 Grad, insbesondere von mindestens 15 Grad, aufweisen. Somit kann die Geräuschentwicklung innerhalb eines Arbeitsbereichs des Durchflussmengenreglers, vorzugsweise eines in eine Auslaufarmatur eingesetzten Durchflussmengenreglers, deutlich reduziert werden. Der Arbeitsbereich kann sich dabei insbesondere auf einen herrschenden Druckunterschied zwischen der Zuströmseite und der Abströmseite des Umgehungskanals von 1 bar bis 5 bar, insbesondere von 1,5 bar bis 4,5 bar, insbesondere von 2 bar bis 4 bar, insbesondere von 2,5 bis 3,5 bar, insbesondere von etwa 3 bar, beziehen.

Gemäß einer weiteren vorteilhaften Ausgestaltung des Durchflussmengenreglers kann eine an einen Längsschnitt des Umgehungskanals, insbesondere an einen Abschnitt des Umgehungskanals, angelegte Tangente in einem von einer Längsrichtung des Umgehungskanals abweichenden Winkel und/oder transversal zur Längsrichtung des Umgehungskanals verlaufen.

Zur Herstellung eines nahezu homogenen Auslaufstrahlbildes, welches vorzugsweise unabhängig vom herrschenden Druckunterschied zwischen der Zuströmseite und der Abströmseite ist, kann die Regelöffnung wenigstens teilweise um den Umgehungskanal herum verlaufen. Insbesondere kann die Regelöffnung als ein Ringspalt ausgebildet sein. Alternativ oder ergänzend dazu kann die Regelöffnung und der Umgehungskanal konzentrisch angeordnet sein.

Um eine möglichst kostengünstige Fertigung des Durchflussmengenreglers zu ermöglichen, kann gemäß einer vorteilhaften Ausgestaltung vorgesehen sein, dass der Durchflussmengenregler ein Gehäuse aufweist, in welches ein Regelteil eingesetzt ist. Somit kann der Durchflussmengenregler auf einfache Weise aus mehreren, insbesondere unabhängig voneinander hergestellten Einzelteilen zusammensetzbar sein. Vorzugsweise kann die Regelöffnung zwischen Gehäuse und Regelteil ausgebildet sein. Alternativ oder ergänzend kann dazu am Regelteil ein Regelprofil ausgebildet sein. Eine druckabhängige Wechselwirkung zwischen dem Regelkörper und dem Regelprofil kann das Regelverhalten des Durchflussmengenreglers definieren. Die Regelöffnung kann somit zwischen dem Regelteil und dem Gehäuse ausgebildet sein.

Gemäß einer vorteilhaften Ausgestaltung kann es vorgesehen sein, dass der Umgehungskanal durch ein Regelteil, beispielsweise dass bereits zuvor genannte Regelteil, ausgebildet ist. Somit ist eine besonders einfache und kostengünstige Fertigung des Umgehungskanals möglich. Die Geometrie des Umgehungskanals kann ausschließlich durch das Regelteil definiert werden, so dass insbesondere eine Ausrichtung des Regelteils relativ zu einem Gehäuse mit gewissen Toleranzen möglich ist.

Gemäß einer weiteren vorteilhaften Ausgestaltung kann es vorgesehen sein, dass ein durch die Regelöffnung führender Hauptströmungspfad und ein durch den Umgehungskanal führender Nebenströmungspfad innerhalb des Gehäuses, insbesondere in Strömungsrichtung hinter der Regelöffnung, zusammengeführt sind.

Um eine Strömungsgeschwindigkeit eines Fluids nach Durchtritt durch den Umgehungskanal und/oder die Regelöffnung zu verringern, kann in Strömungsrichtung am Gehäuse nach der Regelöffnung und/oder nach dem Umgehungskanal eine Querschnittserweiterung innerhalb des Strömungsweges ausgebildet sein.

Gemäß einer besonders vorteilhaften Ausgestaltung kann es vorgesehen sein, dass der Regelkörper elastisch ausgebildet ist. Somit ist es möglich, den Durchflussmengenregler für einen besonders breiten Arbeitsbereich einzurichten, da eine druckabhängige Verformung des Regelkörpers und insbesondere ein druckabhängiges Verschließen der Regelöffnung über einen weitreichenderen Druckbereich möglich ist.

Gemäß einer besonders vorteilhaften Ausgestaltung kann es vorgesehen sein, dass der Durchflussmengenregler als sanitäres Einsetzteil zum Einsatz in eine Auslaufarmatur und/oder in eine Schlauchleitung ausgebildet ist. Weitere Anwendungsgebiete sind in der Sanitär-, Heizungs-, Lüftungsund/oder Klimatechnik. Insbesondere kann ein Einsatz in Fluidleitungen, vorzugsweise in Rohrleitungen, wie bei Heizungs- und/oder Kühlkreisläufen, vorgesehen sein.

Gemäß einer besonders vorteilhaften Ausgestaltung kann es vorgesehen sein, dass ein Regelteil, beispielsweise das bereits zuvor genannte Regelteil, als Spritzgussteil gefertigt ist, insbesondere wobei eine Werkzeugtrennlinie außerhalb des Umgehungskanals liegt. Wenn die Werkzeugtrennlinie außerhalb des Umgehungskanals ausgebildet ist, werden durch diese keine störenden Einflüsse auf das Strömungsverhalten hervorgerufen, so dass ein besonders leiser Durchflussmengenregler bereitstellbar ist.

Die Erfindung betrifft daher außerdem ein Verfahren zur Herstellung eines Durchflussmengenreglers, insbesondere wie er hierin beschrieben und/oder beansprucht ist, wobei ein einen Umgehungskanal ausbildendes Teil mittels Spritzgusses hergestellt wird, wobei eine Werkzeugtrennlinie außerhalb des Umgehungskanals liegt.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: einen Längsschnitt einer vorbekannten Ausgestaltung eines Durchflussmengenreglers mit einem zylindrischen Umgehungskanal (Stand der Technik),
- Fig. 2: eine Explosionsdarstellung des Durchflussmengenreglers nach Fig. 1, wobei die Ansicht eher von unten erfolgt,
- Fig. 3: eine Explosionsdarstellung des Durchflussmengenreglers nach Fig. 1, wobei die Ansicht eher von oben erfolgt,
- Fig. 4: einen Längsschnitt einer ersten möglichen erfindungsgemäßen Ausgestaltung eines Durchflussmengenreglers mit einer über den gesamten Verlauf des Umgehungskanals konischen Form des Umgehungskanals, wobei sich der Umgehungskanal in Strömungsrichtung verjüngt,
- Fig. 5: eine Explosionsdarstellung des Durchflussmengenreglers nach Fig. 4, wobei die Ansicht eher von unten erfolgt,
- Fig. 6: eine Explosionsdarstellung des Durchflussmengenreglers nach Fig. 4, wobei die Ansicht eher von oben erfolgt,
- Fig. 7: einen Längsschnitt einer zweiten möglichen erfindungsgemäßen Ausgestaltung eines Durchflussmengenreglers mit einer über einen Teilbereich des Verlaufs des Umgehungskanals konischen Form des Umgehungskanals, die in eine zylindrische Form des Umgehungskanals übergeht, wobei sich der Umgehungskanal in Strömungsrichtung verjüngt,
- Fig. 8: einen Längsschnitt einer dritten möglichen erfindungsgemäßen Ausgestaltung eines Durchflussmengenreglers mit einer Trichterform des Umgehungskanal, wobei sich der Umgehungskanal in Strömungsrichtung verjüngt,
- Fig. 9: Skizze eines Strömungsverlaufs bei einem vorbekannten Durchflussmengenregler mit über die gesamte Länge des Umgehungskanals geradem Verlauf,
- Fig. 10: Skizze eines Strömungsverlaufs bei einem erfindungsgemäßen Durchflussmengenregler mit sich über die gesamte Länge des Umgehungskanals verändernden Querschnitt.

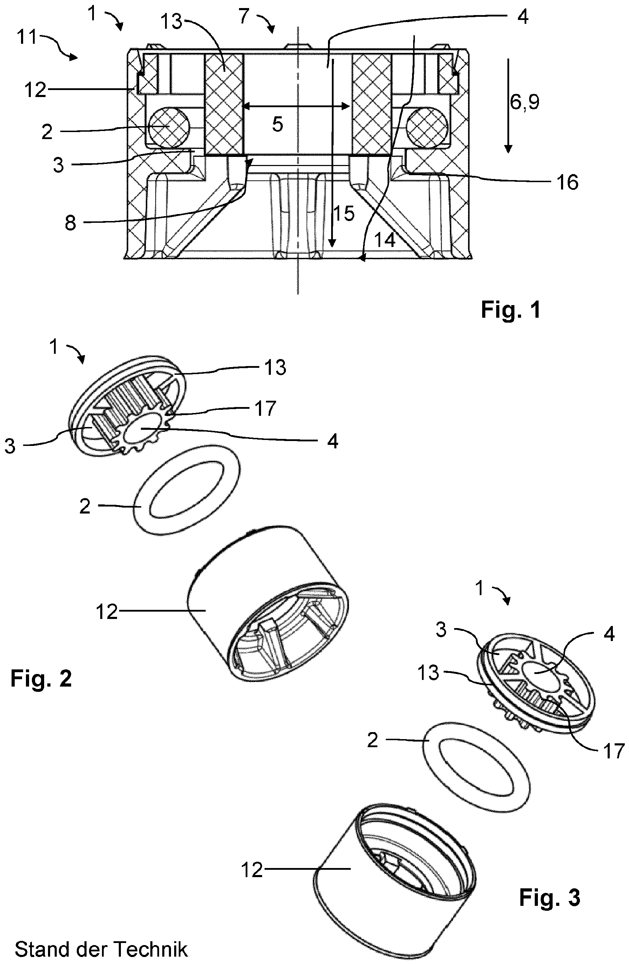

Die Figuren 1 bis 3 zeigen einen vorbekannten Durchflussmengenregler 1, der somit als Stand der Technik zu betrachten ist.

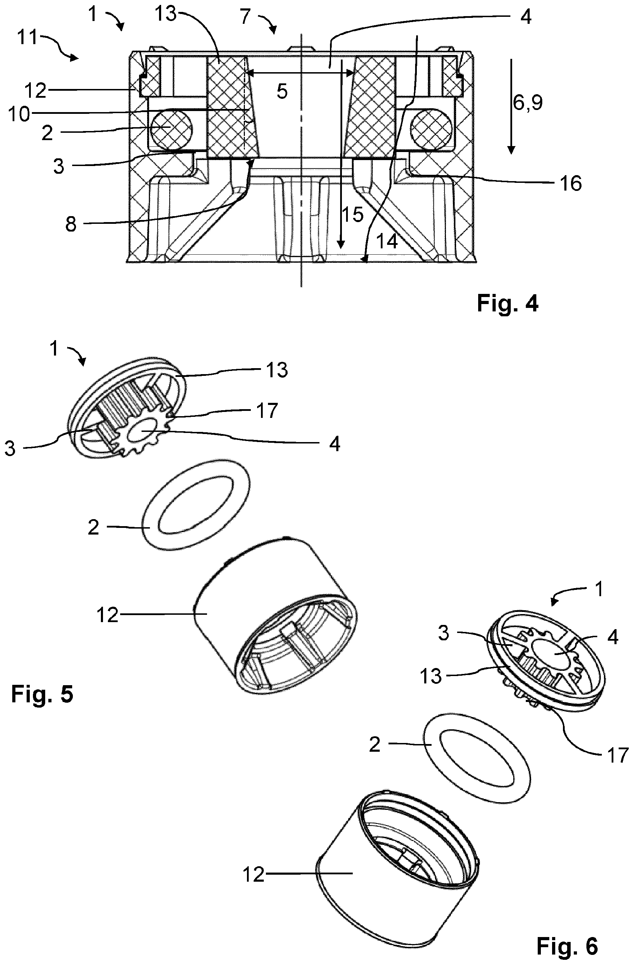

Die Figuren 4 bis 8 zeigen dagegen erfindungsgemäße Ausgestaltungen von Durchflussmengenregler, die im Ganzen jeweils ebenfalls als 1 bezeichnet sind.

Durchflussmengenregler 1 der beschriebenen Art weisen einen Regelkörper 2 auf, der druckabhängig wenigstens eine Regelöffnung 3 freigibt oder verschließt, indem er druckabhängig ihr lichtes Öffnungsmaß verändert. Dabei wird der Regelkörper 2 während des Gebrauchs des Durchflussmengenreglers 1 mit einem Fluid beaufschlagt.

In der Regel ist dabei vorgesehen, dass der Regelkörper 2 bei höheren Drücken näher an die Regelöffnung und/oder stärker gegen eine Dichtfläche gepresst wird, so dass das lichte Öffnungsmaß der Regelöffnung 3 wenigstens teilweise reduziert oder sogar vollständig verschlossen ist.

Durchflussmengenregler 1 können einen Arbeitsbereich aufweisen, in welchem ein Volumenstrom durch den Durchflussmengenregler 1 druckunabhängig nahezu konstant bleibt. Man kennt daher bereits Durchflussmengenregler 1, die wenigstens einen Umgehungskanal 4 zu der Regelöffnung 3 aufweisen. Der Umgehungskanal 4 kann nicht durch den Regelkörper 2 verschlossen werden, so dass sein lichtes Öffnungsmaß bei unterschiedlichen Drücken gleich bleibt, also druckunabhängig und/oder unveränderbar ist.

Wie in den Figuren 1 bis 3 zu erkennen ist, kennt man bereits Durchflussmengenregler 1 mit in Strömungsrichtung 9 gerade verlaufenden Umgehungskanälen 4. Ein Ausrichtungswinkel einer den Umgehungskanal 4 dieser Durchflussmengenregler 1 begrenzenden Wandung entspricht daher dem Winkel einer Längsrichtung des Umgehungskanals 4 und/oder des Durchflussmengenreglers 1. Mit anderen Worten ist die Wandung daher gegenüber der Längsrichtung um null Grad geneigt. Zudem weisen vorbekannte Durchflussmengenregler 1 einen entlang des Verlaufs 6 des Umgehungskanals 4 gleichbleibenden Querschnitt 5 auf, der sich weder in der Form noch im Durchmesser verändert.

Die in den Figuren 4 bis 8 dargestellten Ausführungsvarianten erfindungsgemäßer Durchflussmengenregler 1 weisen im Gegensatz dazu wenigstens einen Umgehungskanal 4 auf, dessen Querschnitt sich entlang seines Verlaufes 6 verändert. Dadurch ist es möglich, die Bildung von Kavitationsblasen, welche sich insbesondere an der Wandung des Umgehungskanals 4 anhaften und die ein Hauptgrund einer störenden Geräuschentwicklung sind, besser zu verhindern.

Die Veränderung kann dabei auf eine Größe und/oder eine Form des Querschnitts bezogen sein. Es kann auch vorgesehen sein, dass sich der Querschnitt des Umgehungskanals 4 über den gesamten Verlauf 6 oder nur über einen Teilabschnitt des Umgehungskanals 4 hinweg verändert.

Die dargestellten Ausführungsvarianten in den Figuren 4 bis 8 weisen die Gemeinsamkeit auf, dass sich ein Durchmesser des Querschnitts des Umgehungskanals 4 verändert.

Ein lichtes Öffnungsmaß des Umgehungskanals 4 an einer Zuströmseite 7 ist dabei jeweils größer als an der Abströmseite 8. Man kann somit auch von einer Verjüngung des Umgehungskanals 4 in einer Strömungsrichtung 9 sprechen.

Die Ausführungsvariante gemäß der Figuren 4 bis 6 weist einen sich entlang seines Verlaufes 6 von der Zuströmseite 7 bis zur Abströmseite 8 kontinuierlich verjüngenden Umgehungskanal 4 auf. Der Umgehungskanal 4 kann also, wie hier dargestellt ist, zum Beispiel eine konische Form aufweisen.

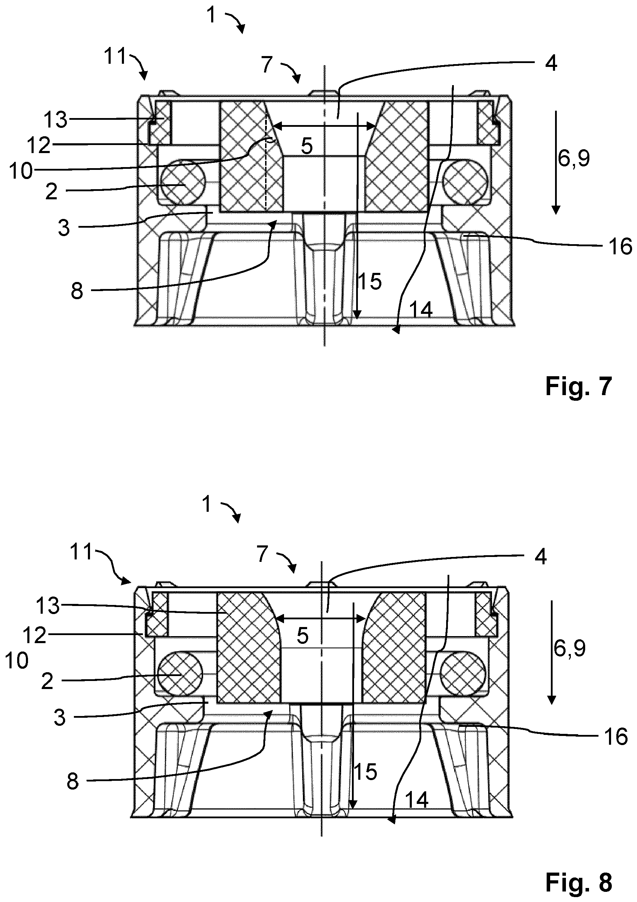

Die Ausführungsvarianten der Figuren 7 und 8 weisen hingegen lediglich eine abschnittsweise Verjüngung auf. Somit verjüngt sich der Umgehungskanal 4 in einem Anfangsabschnitt, der etwa bis zur Hälfte der Gesamtlänge des Umgehungskanals 4 reicht. Daran schließt ein gerade verlaufender Endabschnitt an.

In Fig. 7 ist eine Ausführungsvariante eines Durchflussmengenreglers 1 mit einem im Anfangsbereich ebenfalls konisch ausgeformten Umgehungskanal 4 dargestellt, der dann in einen zylindrischen Endabschnitt und/oder einen Endabschnitt mit einer Wandung, deren Neigungswinkel 10 vom Neigungswinkel 10 des Anfangsbereichs abweicht, übergeht.

In Fig. 8 ist eine Ausführungsvariante eines Durchflussmengenreglers 1 mit einer gewölbten Wandung gezeigt. Dadurch kann zum Beispiel eine konvexe Trichterform ausgebildet sein, die schließlich erneut in einen gerade verlaufenden Endabschnitt übergeht.

Es ist jedoch auch denkbar, dass der Umgehungskanal 4 im Längsschnitt 11 eine einfach oder mehrfach geschwungene Form, insbesondere mit abgerundeten Übergängen, aufweist. Dabei kann ein Rundungsradius von ca. 0,5-3%, insbesondere 1 %, der Gesamtlänge des Umgehungskanals 4 vorgesehen sein. Insbesondere kann also bei einem etwa 10 mm langen Umgehungskanal 4 ein Rundungsradius von 0,1 mm vorgesehen sein.

Weiter kann es vorgesehen sein, dass an der Zuströmseite 7 des Umgehungskanals 4 und/oder am Übergang zwischen dem Anfangsabschnitt und dem Endabschnitt abgerundete Kanten, also insbesondere keine scharfen Kanten, ausgebildet sind.

Ein Neigungswinkel 10 einer den Umgehungskanal 4 begrenzenden Wandung kann in Bezug auf eine Längsrichtung des Umgehungskanal 4 ungleich, insbesondere schräg dazu, ausgerichtet sein. Der Neigungswinkel 10 der Wandung kann dabei in Abhängigkeit eines vorgesehenen Arbeitsbereichs gewählt werden. Grundsätzlich gilt, dass je höher ein über dem Durchflussmengenregler 1 angelegter Druck ist, desto größer muss der Neigungswinkel 10 gewählt werden, um einer störenden Geräuschentwicklung entgegenzuwirken.

Es hat sich gezeigt, dass allgemein ein Neigungswinkel von mindestens 3 Grad erforderlich ist, um eine Geräuschentwicklung zumindest eindämmen zu können.

Vorzugsweise kann es vorgesehen sein, dass eine den Umgehungskanal 4 begrenzende Wandung einen Neigungswinkel 10 von mindestens 4 Grad, insbesondere von mindestens 5 Grad, insbesondere von mindestens 6 Grad, insbesondere von mindestens 7,5 Grad, insbesondere von mindestens 10 Grad, insbesondere von mindestens 12,5 Grad, insbesondere von mindestens 15 Grad, aufweist.

Die Regelöffnung 3 kann wenigstens teilweise um den Umgehungskanal 4 herum verlaufen, um ein möglichst gleichmäßiges und/oder sich bei verändernden Druckverhältnissen kaum veränderndes Auslaufstrahlbild erzeugen zu können. Die Regelöffnung 3 kann zum Beispiel als ein Regelspalt ausgebildet sein, der konzentrisch zum Umgehungskanal 4 angeordnet ist.

Der Durchflussmengenregler 1 weist ein Gehäuse 12 auf, über welches der Durchflussmengenregler 1 zum Beispiel in eine Fluidleitung, insbesondere eine Rohrleitung, und/oder eine Auslaufarmatur und/oder einen Schlauch einsetzbar und darin befestigbar ist. Damit kann der Durchflussmengenregler 1 zum Beispiel zur Regelung von Heizungs- und/oder Kühlkreisläufen eingesetzt werden und daher Anwendung in der Sanitär- und/oder Heizungs- und/oder Lüftungs- und/oder Klimatechnik finden.

In das Gehäuse 12 ist ein Regelteil 13 eingesetzt. Der Regelkörper 2 ist dabei zwischen Gehäuse 12 und Regelteil 13 eingelegt. Vorzugsweise weist der Regelkörper 2 ein Fixierungselement auf, auf welches der Regelkörper 2 aufsetzbar und daran verstellbar geführt ist.

Der Regelkörper 2 kann elastisch ausgebildet sein. Durch eine Druckbeaufschlagung mit einem Fluid kann der Regelkörper 2 somit verformt werden. Durch die Verformung kann die Regelöffnung 3 zumindest teilweise verschlossen werden. Insbesondere kann der Regelkörper 2 dabei gegen eine Dichtfläche am Regelteil 13 gepresst werden und die Regelöffnung 3 zumindest teilweise verschließen. Das Regelteil 13 kann weiter ein Regelprofil 17, insbesondere am Fixierungselement, aufweisen.

Das Regelteil 13 kann den Umgehungskanal 4 ausbilden. Insbesondere kann der Umgehungskanal 4 ausschließlich durch das Regelteil 13 ausgebildet sein.

Der Durchflussmengenregler 1 weist einen durch die Regelöffnung 3 führenden Hauptströmungspfad 14 und einen durch den Umgehungskanal 4 führender Nebenströmungspfad 15 auf. Der Hauptströmungspfad 14 kann im Gegensatz zum Nebenströmungspfad 15 druckabhängig in seinem lichten Öffnungsmaß verändert werden.

Der Hauptströmungspfad 14 und der Nebenströmungspfad 15 sind innerhalb des Gehäuses 12, insbesondere in Strömungsrichtung 9 hinter der Regelöffnung 3, zusammengeführt.

In Strömungsrichtung 9 hinter dem Hauptströmungspfad 14 und dem Nebenströmungspfad 15 ist eine Querschnittserweiterung 16 innerhalb des Strömungsweges ausgebildet.

Das Regelteil 13 kann beispielsweise relativ kostengünstig durch Spritzguss hergestellt werden. Dabei ist darauf zu achten, dass eine vom zur Herstellung verwendeten Spritzguss-Werkzeug abhängige Werkzeugtrennlinie nicht innerhalb des Umgehungskanals 4 liegt. Dadurch kann verhindert werden, dass es aufgrund einer im Umgehungskanal 4 liegenden Werkzeugtrennlinie zu ungewollten Geräuschentwicklungen kommt.

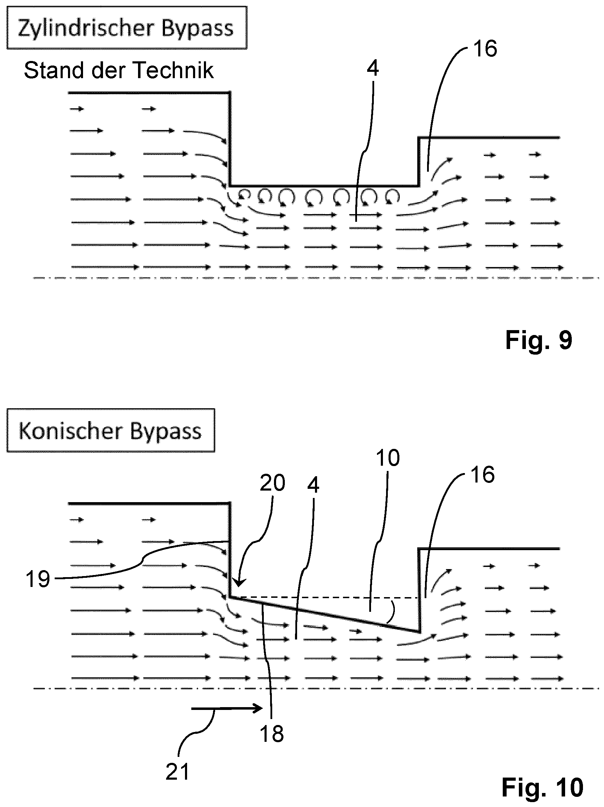

In den Figuren 9 und 10 ist ein Vergleich zwischen dem Strömungsverhalten von einem vorbekannten, zum Stand der Technik zählenden Durchflussmengenregler 1 mit gerade verlaufendem Umgehungskanal 4 (Fig. 9) und einem erfindungsgemäßen Durchflussmengenregler 1 mit ungerade verlaufendem Umgehungskanal 4 (Fig. 10) dargestellt.

Wie in Fig.9 gezeigt ist, bilden sich bei einem geraden Umgehungskanal 4 während des Gebrauchs des Durchflussmengenreglers 1 an der den Umgehungskanal 4 begrenzenden Wandung regelrechte Turbulenzen aus, die dazu führen, dass im Wandbereich ein Unterdruckgebiet entsteht, indem sich ein Fluidstrahl von der Wandung löst. Somit können sich Kavitätsbläschen bilden, die einen lokalen Strömungswiderstand darstellen, der eine störende Geräuschentwicklung hervorruft.

Bei dem konisch verlaufenden Umgehungskanal 4 aus Fig. 10 ist im Gegensatz dazu keine Bildung von Kavitationsblasen zu erkennen. Vielmehr weist der Umgehungskanal 4 eine Wirkung wie eine Düse auf. Somit kann ein Fluid beim Hindurchströmen im Umgehungskanal 4 beschleunigt werden, wobei dabei verhindert werden kann, dass es innerhalb des Umgehungskanals 4 zur Entstehung einer Unterdruckregion kommt. Der Fluidstrom löst sich daher nicht von der Wandung ab, sondern strömt an dieser entlang, bis er die Querschnittserweiterung 16 erreicht hat.

In Fig. 10 ist am Beispiel des konischen Bypasses zu erkennen, dass der Umgehungskanal 4 eine Umfangswandung 18 hat, die um die Strömungsrichtung 21 läuft und die sich über den gesamten Umgehungskanal 4 erstreckt.

Der Umgehungskanal 4 wird auf der Zuströmseite 7 in seiner Längsrichtung durch eine Stirnwandung 19 begrenzt.

Stirnwandung 19 und Umfangswandung 18 schließen einen Winkel 20 ein. Der Winkel 20 beträgt mehr als 90° und liegt in Beispiel zwischen 93° und 100°.

Es ist weiter erkennbar, dass der Umgehungskanal 4 in Strömungsrichtung 21 hinterschnittfrei ausgebildet ist. Der Umgehungskanal 4 kann somit entgegen der Strömungsrichtung 21 entformt werden.

Man kann sagen, dass der Umgehungskanal 4 einen monoton in Strömungsrichtung 21 abnehmenden lichten Öffnungsquerschnitt hat. Dies kann beispielsweise dadurch charakterisiert werden, dass kein Abschnitt des Umgehungskanals 4 vorhanden ist, der einen kleineren Öffnungsquerschnitt als ein in Strömungsrichtung vorangehender Abschnitt des Umgehungskanals 4.

Die Erfindung betrifft also insbesondere einen Durchflussmengenregler 1 mit einem Regelkörper 2, durch den eine Regelöffnung 3 in Abhängigkeit eines den Regelkörper 2 beaufschlagenden fluidischen Drucks begrenzbar ist, wobei der Durchflussmengenregler 1 einen Umgehungskanal 4 aufweist, über welchen ein Fluid an der Regelöffnung 3 vorbeiströmen kann, ohne diese zu passieren, wobei sich der Umgehungskanal 4 entlang des Verlaufs 6 verändert.

### Bezugszeichenliste

- 1: Durchflussmengenregler
- 2: Regelkörper
- 3: Regelöffnung
- 4: Umgehungskanal
- 5: Querschnitt
- 6: Verlauf des Umgehungskanals
- 7: Zuströmseite
- 8: Abströmseite
- 9: Strömungsrichtung
- 10: Neigungswinkel
- 11: Längsschnitt
- 12: Gehäuse
- 13: Regelteil
- 14: Hauptströmungspfad
- 15: Nebenströmungspfad
- 16: Querschnittserweiterung
- 17: Regelprofil
- 18: Umfangswandung von 4
- 19: Stirnwandung
- 20: Winkel
- 21: Strömungsrichtung

## Patentansprüche

1. Durchflussmengenregler (1) mit einem Regelkörper (2), durch den ein lichtes Öffnungsmaß einer Regelöffnung (3) in Abhängigkeit eines den Regelkörper (2) beaufschlagenden Drucks veränderbar ist, wobei der Durchflussmengenregler (1) einen Umgehungskanal (4) zu der Regelöffnung (3) aufweist, **dadurch gekennzeichnet, dass** sich der Querschnitt des Umgehungskanals (4) entlang des Verlaufs (6) des Umgehungskanals (4) verändert, wobei der Umgehungskanal (4) in Strömungsrichtung (21) hinterschnittfrei ausgebildet ist und einen monoton in Strömungsrichtung (21) abnehmenden lichten Öffnungsquerschnitt hat.

2. Durchflussmengenregler (1) nach Anspruch 1, **dadurch gekennzeichnet, dass** der Querschnitt (5) des Umgehungskanals (4) entlang seines Verlaufs (6) im Durchmesser variiert und/oder dass sich eine Querschnittsform entlang seines Verlaufs (6) verändert.

3. Durchflussmengenregler (1) nach Anspruch 1 oder 2, **dadurch gekennzeichnet, dass** der Umgehungskanal (4) eine Umfangswandung (18) hat, die mit einer Stirnwandung (19), die den Umgehungskanal (4) auf einer Zuströmseite (7) längs einer Strömungsrichtung (21) begrenzt, einen Winkel (20) von mehr als 90°, insbesondere mehr als 93° und/oder weniger als 100°, einschließt.

4. Durchflussmengenregler (1) nach einem der vorstehenden Ansprüche, **dadurch gekennzeichnet, dass** der Umgehungskanal (4) wenigstens abschnittsweise eine konische und/oder geschwungene Form aufweist.

5. Durchflussmengenregler (1) nach einem der vorstehenden Ansprüche, **dadurch gekennzeichnet, dass** eine den Umgehungskanal (4) begrenzende Wandung einen Neigungswinkel (10) von mindestens 3 Grad aufweist.

6. Durchflussmengenregler (1) nach einem der vorstehenden Ansprüche, **dadurch gekennzeichnet, dass** eine an einen Längsschnitt (11) des Umgehungskanals (4) angelegte Tangente in einem von einer Längsrichtung des Umgehungskanals (4) abweichenden Winkel und/oder transversal zur Längsrichtung des Umgehungskanals (4) verläuft.

7. Durchflussmengenregler (1) nach einem der vorstehenden Ansprüche, **dadurch gekennzeichnet, dass** die Regelöffnung (3) wenigstens teilweise um den Umgehungskanal (4) herum verläuft, insbesondere dass die Regelöffnung (3) als Ringspalt ausgebildet ist und/oder dass die Regelöffnung (3) und der Umgehungskanal (4) konzentrisch angeordnet sind.

8. Durchflussmengenregler (1) nach einem der vorstehenden Ansprüche, **dadurch gekennzeichnet, dass** der Durchflussmengenregler (1) ein Gehäuse (12) aufweist, in welches ein Regelteil (13) eingesetzt ist.

9. Durchflussmengenregler (1) nach einem der vorstehenden Ansprüche, **dadurch gekennzeichnet, dass** der Umgehungskanal (4) durch ein oder das Regelteil (13) ausgebildet ist.

10. Durchflussmengenregler (1) nach einem der vorstehenden Ansprüche, **dadurch gekennzeichnet, dass** ein durch die Regelöffnung (3) führender Hauptströmungspfad (14) und ein durch den Umgehungskanal (4) führender Nebenströmungspfad (15) innerhalb des Gehäuses (12) zusammengeführt sind.

11. Durchflussmengenregler (1) nach einem der vorstehenden Ansprüche, **dadurch gekennzeichnet, dass** in Strömungsrichtung (9) am Gehäuse (12) nach der Regelöffnung (3) und/oder nach dem Umgehungskanal (4) eine Querschnittserweiterung (16) innerhalb des Strömungsweges ausgebildet ist.

12. Durchflussmengenregler (1) nach einem der vorstehenden Ansprüche, **dadurch gekennzeichnet, dass** der Regelkörper (2) elastisch ausgebildet ist.

13. Durchflussmengenregler (1) nach einem der vorstehenden Ansprüche, **dadurch gekennzeichnet, dass** der Durchflussmengenregler (1) als sanitäres Einsetzteil zum Einsatz in eine Fluidleitung, insbesondere in eine Rohrleitung, und/oder in eine Auslaufarmatur und/oder in eine Schlauchleitung ausgebildet ist.

14. Durchflussmengenregler (1) nach einem der vorstehenden Ansprüche, **dadurch gekennzeichnet, dass** ein oder das Regelteil (13) als Spritzgussteil gefertigt ist, insbesondere wobei eine Werkzeugtrennlinie außerhalb des Umgehungskanals (4) liegt.

15. Verfahren zur Herstellung eines Durchflussmengenreglers (1), nach einem der vorstehenden Ansprüche, **dadurch gekennzeichnet, dass** ein einen Umgehungskanal (4) ausbildendes Teil mittels Spritzgusses hergestellt wird, wobei eine Werkzeugtrennlinie außerhalb des Umgehungskanals (4) liegt.

## Claims

1. Flow-rate regulator (1) having a regulation body (2), by way of which a clear opening dimension of a regulation opening (3) can be varied in a manner dependent on a pressure acting on the regulation body (2), wherein the flow-rate regulator (1) has a bypass channel (4) in relation to the regulation opening (3), **characterized in that** the cross section of the bypass channel (4) varies along the course (6) of the bypass channel (4), wherein the bypass channel (4) is formed without any undercuts in the flow direction (21) and has a clear opening cross section which decreases in size monotonically in the flow direction (21).

2. Flow-rate regulator (1) according to Claim 1, **characterized in that** the cross section (5) of the bypass channel (4) varies in diameter along the course (6) thereof, and/or **in that** a cross-sectional shape varies along the course (6) thereof.

3. Flow-rate regulator (1) according to Claim 1 or 2, **characterized in that** the bypass channel (4) has a circumferential wall (18) which includes an angle (20) of greater than 90°, in particular of greater than 93° and/or of less than 100°, with an end wall (19) which delimits the bypass channel (4) at an inflow side (7) along a flow direction (21).

4. Flow-rate regulator (1) according to one of the preceding claims, **characterized in that** the bypass channel (4) at least sectionally has a conical and/or curved shape.

5. Flow-rate regulator (1) according to one of the preceding claims, **characterized in that** a wall delimiting the bypass channel (4) has an angle of inclination (10) of at least 3 degrees.

6. Flow-rate regulator (1) according to one of the preceding claims, **characterized in that** a tangent to a longitudinal section (11) of the bypass channel (4) extends at an angle which deviates from a longitudinal direction of the bypass channel (4) and/or extends transversely to the longitudinal direction of the bypass channel (4).

7. Flow-rate regulator (1) according to one of the preceding claims, **characterized in that** the regulation opening (3) extends at least partially around the bypass channel (4), in particular **in that** the regulation opening (3) is in the form of a ringshaped gap, and/or **in that** the regulation opening (3) and the bypass channel (4) are arranged in a concentric manner.

8. Flow-rate regulator (1) according to one of the preceding claims, **characterized in that** the flow-rate regulator (1) has a housing (12) into which a regulation part (13) is inserted.

9. Flow-rate regulator (1) according to one of the preceding claims, **characterized in that** the bypass channel (4) is formed by a or the regulation part (13) .

10. Flow-rate regulator (1) according to one of the preceding claims, **characterized in that** a main-flow path (14) leading through the regulation opening (3) and a secondary-flow path (15) leading through the bypass channel (4) are combined within the housing (12) .

11. Flow-rate regulator (1) according to one of the preceding claims, **characterized in that**, after the regulation opening (3) and/or after the bypass channel (4) in the flow direction (9) at the housing (12), a cross-sectional widening (16) is formed within the flow path.

12. Flow-rate regulator (1) according to one of the preceding claims, **characterized in that** the regulation body (2) is of elastic form.

13. Flow-rate regulator (1) according to one of the preceding claims, **characterized in that** the flow-rate regulator (1) is in the form of a sanitary insert part for insertion into a fluid line, in particular into a pipeline, and/or into an outlet fitting and/or into a hose line.

14. Flow-rate regulator (1) according to one of the preceding claims, **characterized in that** a or the regulation part (13) is manufactured as an injection-moulded part, in particular wherein a mould parting line is situated outside the bypass channel (4).

15. Method for producing a flow-rate regulator (1) according to one of the preceding claims, **characterized in that** a part forming a bypass channel (4) is produced by means of injection moulding, wherein a mould parting line is situated outside the bypass channel (4).

## Revendications

1. Régulateur de débit (1) avec un corps de régulation (2) par le biais duquel un degré d'ouverture d'une ouverture de régulation (3) peut être modifié en fonction d'une pression appliquée au corps de régulation (2), lequel régulateur de débit (1) comporte un canal de dérivation (4) vers l'ouverture de régulation (3), **caractérisé en ce que** la section transversale du canal de dérivation (4) se modifie le long du parcours (6) du canal de dérivation (4), le canal de dérivation (4) étant dépourvu de contre-dépouille dans la direction d'écoulement (21) et ayant une section d'ouverture diminuant progressivement dans la direction d'écoulement (21).

2. Régulateur de débit (1) selon la revendication 1, **caractérisé en ce que** la section transversale (5) du canal de dérivation (4) varie en diamètre le long de son parcours (6) et/ou qu'une forme de section transversale se modifie le long de soin parcours (6).

3. Régulateur de débit (1) selon la revendication 1 ou 2, **caractérisé en ce que** le canal de dérivation (4) a une paroi périphérique (18) qui forme avec une paroi frontale (19) qui délimite le canal de dérivation (4) sur un côté d'afflux (7) le long d'une direction d'écoulement (21) un angle (20) de plus de 90°, en particulier de plus de 93° et/ou de moins de 100°.

4. Régulateur de débit (1) selon une des revendications précédentes, **caractérisé en ce que** le canal de dérivation (4) présente au moins sur une section une forme conique et/ou incurvée.

5. Régulateur de débit (1) selon une des revendications précédentes, **caractérisé en ce qu'**une paroi délimitant le canal de dérivation (4) présente un angle d'inclinaison (10) d'au moins 3 degrés.

6. Régulateur de débit (1) selon une des revendications précédentes, **caractérisé en ce qu'**une tangente disposée sur une coupe longitudinale (11) du canal de dérivation (4) court dans un angle différent d'une direction longitudinale du canal de dérivation (4) et/ou transversalement à la direction longitudinale du canal de dérivation (4).

7. Régulateur de débit (1) selon une des revendications précédentes, **caractérisé en ce que** l'ouverture de régulation (3) court au moins partiellement autour du canal de dérivation (4), en particulier que l'ouverture de régulation (3) est configurée comme une fente annulaire et/ou que l'ouverture de régulation (3) et le canal de dérivation (4) sont disposés de manière concentrique.

8. Régulateur de débit (1) selon une des revendications précédentes, **caractérisé en ce que** ce régulateur de débit (1) comporte un boîtier (12) dans lequel un élément de régulation (13) est inséré.

9. Régulateur de débit (1) selon une des revendications précédentes, **caractérisé en ce que** le canal de dérivation (4) est formé par un ou l'élément de régulation (13).

10. Régulateur de débit (1) selon une des revendications précédentes, **caractérisé en ce qu'**un chemin d'écoulement principal (14) conduisant à travers l'ouverture de régulation (3) et un chemin d'écoulement annexe (15) conduisant à travers le canal de dérivation (4) sont réunis à l'intérieur du boîtier (12).

11. Régulateur de débit (1) selon une des revendications précédentes, **caractérisé en ce que** dans la direction d'écoulement (9), au niveau du boîtier (12) après l'ouverture de régulation (3) et/ou après le canal de dérivation (4), un agrandissement de section (16) est formé à l'intérieur du chemin d'écoulement.

12. Régulateur de débit (1) selon une des revendications précédentes, **caractérisé en ce que** le corps de régulation (2) est conçu de façon élastique.

13. Régulateur de débit (1) selon une des revendications précédentes, **caractérisé en ce que** ce régulateur de débit (1) est conçu comme un élément d'insertion sanitaire à insérer dans une conduite de fluide, en particulier dans une canalisation et/ou dans un robinet d'écoulement et/ou dans une conduite souple.

14. Régulateur de débit (1) selon une des revendications précédentes, **caractérisé en ce qu'**un ou l'élément de régulation (13) est fabriqué comme une pièce moulée par injection, en particulier une interface d'outil se trouvant à l'extérieur du canal de dérivation (4).

15. Procédé de production d'un régulateur de débit (1) selon une des revendications précédentes, **caractérisé en ce qu'un** élément formant un canal de dérivation (4) est fabriqué au moyen d'un moulage par injection, une interface d'outil se trouvant à l'extérieur du canal de dérivation (4).
